# EUROPEAN PATENT APPLICATION

(11) **EP 3 702 096 A1**
(43) Date of publication of application: **02.09.2020**
(21) Application number: 18870924.0
(22) Date of filing: 23.01.2018
(51) Int. Cl.: B23P 19/06

(54) **BOLT LOCKING METHOD, BOLT UNLOCKING METHOD, BOLT LOCKING AND UNLOCKING METHOD, AND AUTOMOTIVE BATTERY REPLACING METHOD**

(30) Priority: 26.10.2017 CN 201711012039
(71) Applicant: NIO Nextev Limited, Central, Hong Kong (HK)
(72) Inventor: JIA, Lei, Central Hong Kong (CN)
(74) Representative: Vossius & Partner Patentanwälte Rechtsanwälte mbB
(86) International application number: PCT/CN2018/073807
(87) International publication number: WO 2019/080385

(57) **Abstract**

Disclosed are a bolt locking method, a bolt unlocking method, a bolt locking/unlocking control method, and a vehicle battery replacement method. The bolt locking method is used for a bolt locking device, which comprises a bolt screwing element and a locking-assisting check block used for providing a reaction force to adjust a screwing torque of the bolt screwing element; and the bolt locking method comprises: a docking step S110, wherein the bolt screwing element is driven to be centered and engaged with a bolt end at a first speed in a first set interval of numbers of screwing turns for docking, and at this moment the bolt screwing element abuts against the locking-assisting check block; and a locking step S120, wherein the bolt screwing element is driven to screw a bolt at a second speed in a set interval of numbers of screwing turns for locking until a screwing torque is increased to a set locking torque, and at this moment it is determined that the bolt is successfully locked; and meanwhile, the bolt screwing element counteracts the reaction force of the locking-assisting check block. With the bolt locking/unlocking method, effective protection of the bolt locking/unlocking process and flexible control of bolt locking/unlocking are achieved.

## Description

### Technical Field

The invention relates to the field of battery assembly and disassembly, in particular to a bolt locking/unlocking method in battery replacement of an electric vehicle.

### Background Art

With the supply pressure and tail gas pollution caused by traditional fossil energy consumption, the development of traditional fuel vehicles has come to a lag period. For this reason, energy-saving and environmentally-friendly electric vehicles have been developed very fast in recent years due to the good prospect of green energy. At present, in the development process of the electric vehicles, due to the limitation of current battery technologies, the problems of insufficient battery capacity and long charging time are inevitable at the present stage. In order to solve such technical problems, on the one hand, the research and development investment in the battery technologies is increased, and on the other hand, the development of battery peripheral technologies is also solved. For example, battery replacement is an extremely quick, convenient, and safe solution.

In the technical development orientation of battery replacement, a chassis type battery mounting and replacement technology has become the mainstream of battery replacement setting in consideration of safety and space sufficiency for separating traction batteries from drivers and passengers. In order to ensure the mounting firmness and safety of a chassis battery, a conventional mounting means is a threaded rotary screwing structure which is provided with a plurality of screwing points. How to realize an automatic bolt locking/unlocking operation in the battery replacement process has become a technical problem urgently needing to be solved.

### Summary of the Invention

An object of the invention is to provide a bolt locking method capable of flexibly controlling a locking process.

Another object of the invention is to provide a bolt unlocking method capable of flexibly controlling an unlocking process.

Still another object of the invention is to provide a bolt locking/unlocking method capable of flexibly controlling a locking/unlocking process.

Yet another object of the invention is to provide a vehicle battery replacement method capable of flexibly controlling a locking/unlocking process.

For achieving the object of the invention, according to one aspect of the invention, a bolt locking method is provided and used for a bolt locking device, and the bolt locking device comprises a bolt screwing element and a locking-assisting check block, the locking-assisting check block being used for providing a reaction force to adjust a screwing torque of the bolt screwing element. The bolt locking method comprises: a docking step S110, wherein the bolt screwing element is driven to be centered and engaged with a bolt end at a first speed in a first set interval of numbers of screwing turns for docking, and at this moment the bolt screwing element abuts against the locking-assisting check block; and a locking step S120, wherein the bolt screwing element is driven to screw a bolt at a second speed in a set interval of numbers of screwing turns for locking until a screwing torque is increased to a set locking torque, and at this moment it is determined that the bolt is successfully locked; and meanwhile, the bolt screwing element counteracts the reaction force of the locking-assisting check block.

Optionally, the bolt locking method further comprises an abnormality determination step S130: when the screwing torque is increased to the set locking torque, it is determined that the bolt is locked abnormally if the number of screwing turns for locking of the bolt screwing element is smaller than the set interval of numbers of screwing turns for locking; and/or when the number of screwing turns for locking of the bolt screwing element is greater than the set interval of numbers of screwing turns for locking, it is determined that the bolt is locked abnormally if the screwing torque is not increased to the set locking torque.

Optionally, the set interval of numbers of screwing turns for docking is 1 to 2 turns.

Optionally, in the docking step S 110, the first speed is set to a uniformly decelerating state.

Optionally, in the locking step S120, the second speed is set to a uniform speed state.

Optionally, the first speed is greater than or equal to the second speed.

According to another aspect of the invention, a bolt unlocking method is also provided and used for a bolt unlocking device, and the bolt unlocking device comprises a bolt screwing element. The bolt unlocking method comprises: a docking step S210, wherein the bolt screwing element is driven to be centered and engaged with a bolt end at a third speed in a second set interval of numbers of screwing turns for docking until a screwing torque of the bolt screwing element is increased to a set centering torque, and at this moment it is determined that the bolt screwing element is successfully centered with a bolt; and an unlocking step S220, wherein the bolt screwing element is driven to screw the bolt at a fourth speed in a set interval of numbers of screwing turns for unlocking until the screwing torque is decreased to a set unlocking torque, and at this moment it is determined that the bolt is successfully unlocked.

Optionally, the bolt unlocking method further comprises an abnormality determination step S230: when the number of screwing turns for docking of the bolt screwing element is in the second set interval of numbers of screwing turns for docking, it is determined that the bolt is centered abnormally if the screwing torque is not increased to the set centering torque; and/or when the number of screwing turns for unlocking of the bolt screwing element is greater than the set interval of numbers of screwing turns for unlocking, it is determined that the bolt is unlocked abnormally if the screwing torque is not decreased to the set unlocking torque.

Optionally, the unlocking step S220 further comprises: the bolt screwing element is driven to screw the bolt at the fourth speed in the set interval of numbers of screwing turns for unlocking until the screwing torque reaches the set unlocking torque, a preset unlocking time period is maintained, and at this moment it is determined that the bolt is successfully unlocked.

Optionally, the set interval of numbers of screwing turns for unlocking is 8 to 12 turns.

Optionally, the set interval of numbers of screwing turns for docking is 1 to 2 turns.

According to still another aspect of the invention, a bolt locking/unlocking control method is also provided and used for a bolt locking/unlocking device, and the bolt locking/unlocking device comprises a bolt screwing element for bolt locking/unlocking and a locking-assisting check block, the locking-assisting check block being used for providing a reaction force to adjust a screwing torque of the bolt screwing element. The bolt locking/unlocking control method comprises: a start step S310 for powering on the bolt locking/unlocking device; a mode switching step S320 for enabling a manual locking/unlocking mode or an automatic locking/unlocking mode of the bolt locking/unlocking device; a locking/unlocking step S330 comprising an automatic mode S331 for: executing bolt locking based on the bolt locking method as described above; and/or executing bolt unlocking based on the bolt unlocking method as described above; and a shutdown step S340 for powering off the bolt locking/unlocking device.

Optionally, the locking/unlocking step S330 further comprises a manual mode S332 for: executing manual locking/unlocking and/or parameter setting and/or locking-assisting check block.

Optionally, switching to the automatic mode S331 or the shutdown step S340 is performed after execution of the manual mode S332 is completed.

Optionally, switching to the manual mode S332 is performed after the shutdown step S340 is completed.

Optionally, switching to the mode switching mode S320 or the shutdown step S340 is performed after execution of the automatic mode S331 is completed.

According to yet another aspect of the invention, a vehicle battery replacement method is also provided and comprises the bolt locking/unlocking control method as set forth in the preceding claim.

According to a further aspect of the invention, an electric vehicle comprising a frame assembly as described above is also provided. By using the frame assembly with tight connection among parts, the whole vehicle is lighter in weight and has higher structural strength to cope with collision, and the safety performance is improved.

According to the bolt locking method, the bolt unlocking method, the bolt locking/unlocking control method and the vehicle battery replacement method of the invention, by reasonably setting the screwing torque and the number of screwing turns and in combination with the adjustment effect of the reverse acting force of the locking-assisting check block applied in the locking process, effective protection on the bolt in the locking/unlocking process is realized, and flexible control of bolt screwing and unscrewing is achieved.

### Brief Description of the Drawings

Fig. 1 is a schematic diagram showing the variation trend of each parameter under the influence of a locking-assisting check block in a bolt locking process of the invention.
Fig. 2 is a schematic diagram showing the variation trend of each parameter in the bolt locking process of the invention.
Fig. 3 is a schematic diagram showing the variation trend of each parameter in a bolt unlocking process of the invention.
Fig. 4 is a schematic flow chart of a bolt locking/unlocking control method of the invention.

### Detailed Description of Embodiments

In accordance with an embodiment of the invention, a bolt locking method is provided. The bolt locking method is applied to a bolt locking device, and the bolt locking device should comprise at least a bolt screwing element and a locking-assisting check block, wherein the locking-assisting check block is used for providing a reaction force to adjust a screwing torque of the bolt screwing element.

Specifically, the bolt locking method comprises: a docking step S110, wherein the bolt screwing element is driven to be centered and engaged with a bolt end at a first speed in a first set interval of numbers of screwing turns for docking, and at this moment the bolt screwing element abuts against the locking-assisting check block. By means of the docking step S110, recognition and engagement of a nut at an end of a bolt to be screwed by the bolt screwing element can be achieved.

This step, which is a preliminary step of screwing the bolt, should not take too much effort and is therefore generally required to be completed in a relatively short time. At this time, optionally, the first set interval of numbers of screwing turns for docking is set as 1 to 2 turns.

In addition, during the movement of the bolt screwing element towards the bolt to be screwed, the closer it is to the bolt to be screwed, the higher its alignment with the bolt to be screwed is required. Therefore, in the process, the first speed is optionally set to a uniformly decelerating state. With this arrangement, there is relatively more time to achieve nut recognition and docking when the bolt screwing element is gradually close to the bolt to be screwed.

After the docking step S110 is completed, the bolt locking method further comprises: a locking step S 120 in which the bolt screwing element is driven to screw a bolt at a second speed in a set interval of numbers of screwing turns for locking until a screwing torque is increased to a set locking torque, and at this moment it is determined that the bolt is successfully locked; and meanwhile, the bolt screwing element counteracts the reaction force of the locking-assisting check block. By means of the locking step S 120, it can be achieved that the bolt screwing element screws the bolt to be screwed to a target position. If a vehicle battery is taken as an example, the bolt is screwed to fix the battery to a vehicle chassis by the bolt screwing element. In addition, whether the foregoing locking process is successful or not can be determined according to data feedback of the screwing torque and the number of screwing turns. For example, when the bolt screwing element is screwed in the set interval of numbers of screwing turns for locking until the screwing torque of the bolt screwing element is increased to the set locking torque, it is determined that the bolt is successfully locked.

Furthermore, in the locking method, due to the fact that the locking-assisting check block is used for control, compliant and quick response to adjustment following is made by adjusting the resistance provided by the locking-assisting check block when the bolt screwing element is subjected to a blocking reaction force. For example, optionally, in this process, the second speed of the bolt screwing element is adjusted to a uniform speed state maintained at all times for the purpose of gently and smoothly controlling the torque. Compared with conventional torque control, fast PID response to following is used here, and real-time smooth torque following is performed with the change of external torque feedback.

Optionally, in the foregoing process, the first speed should be set to be greater than or equal to the second speed. That is, in the docking step S110, the bolt screwing element can be moved at a relatively faster speed and gradually reduced until it completes the nut docking and abuts against the locking-assisting check block, and at this time it is considered that the locking step S120 will be subsequently executed, and the locking step S120 is executed at a reduced speed to ensure smooth and reliable screwing of the bolt.

Optionally, in order to protect a bolt structure and improve the reliability of the bolt locking process, the bolt locking method further comprises an abnormality determination step S130: when the screwing torque is increased to the set locking torque, it is determined that the bolt is locked abnormally if the number of screwing turns for locking of the bolt screwing element is smaller than the set interval of numbers of screwing turns for locking, and the abnormal condition may be clamping stagnation of the bolt; and/or when the number of screwing turns for locking of the bolt screwing element is greater than the set interval of numbers of screwing turns for locking, it is determined that the bolt is locked abnormally if the screwing torque is not increased to the set locking torque, and the abnormal condition may be bolt slipping. By means of the abnormality determination step S130, when the bolt locking is not successful, it can be further determined whether an abnormal condition and a possible abnormality type exist based on the parameters fed back.

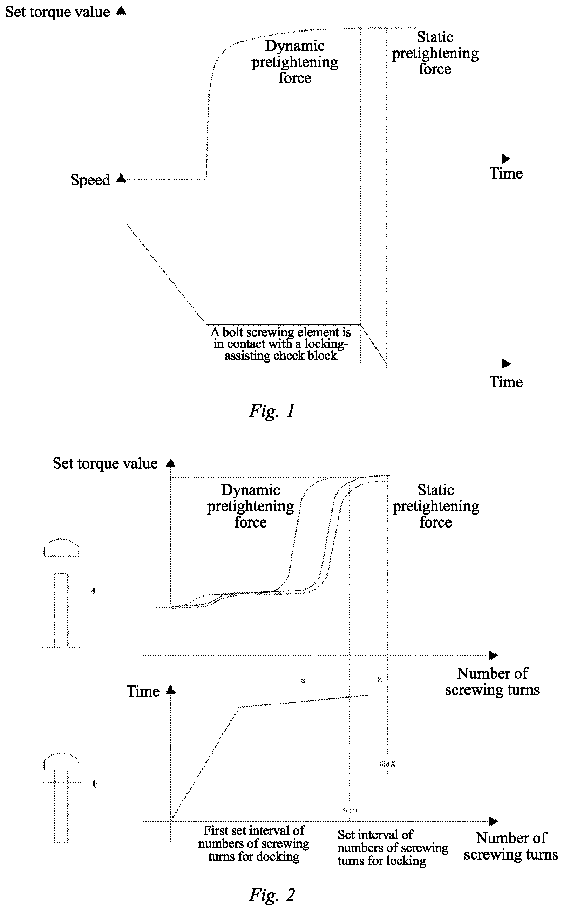

Referring to Figs. 1 and 2, multiple schematic diagrams of the variation trends of the parameters are shown, specifically embodying the overall locking process in an embodiment employing the bolt locking method and showing the function of the locking-assisting check block therein. In particular, the screwing torque is almost 0 before the bolt screwing element is engaged with the bolt end; and as the bolt screwing element is increasingly close to the bolt end, the running speed of the bolt screwing element is reduced in a uniformly decelerating manner. In this process, the number of screwing turns of the bolt screwing element is also uniformly increased. After the bolt screwing element is successfully engaged with the bolt end, the locking process begins, and at this moment, the bolt screwing element keeps screwing the bolt at a uniform speed under the assistant adjustment of the locking-assisting check block. The dynamic pretightening force experienced by the bolt screwing element gradually increases along with the deepening of the screwed bolt, so that the locking torque required to be applied is also gradually increased along with the rapid adjustment of a set value until the set value is reached, and the bolt locking process is completed. In consideration of experimental errors and possible influence factors in practical applications, the foregoing set parameters may be set in a reasonable range rather than being limited to a specific value.

The real-time screwing torque can be calculated in combination with electric current loop feedback, while the number of real-time screwing turns can be obtained based on encoder position feedback.

In accordance with another embodiment of the invention, a bolt unlocking method is also provided. The bolt unlocking method is applied to a bolt unlocking device, and the bolt unlocking device should comprise at least a bolt screwing element.

Specifically, the bolt unlocking method comprises: a docking step S210, wherein the bolt screwing element is driven to be centered and engaged with a bolt end at a third speed in a second set interval of numbers of screwing turns for docking until the screwing torque of the bolt screwing element is increased to a set centering torque, and at this moment it is determined that the bolt screwing element is successfully centered with a bolt. Since the bolt needing to be docked at this time is in a fastened state with respect to bolt locking and docking, it is also necessary to additionally refer to the screwing torque in an engaged state so as to determine whether the docking is successful. By means of the docking step S210, recognition and engagement of a nut at an end of the bolt to be screwed by the bolt screwing element can be achieved.

This step, which is a preliminary step of screwing the bolt, should not take too much effort and is therefore generally required to be completed in a relatively short time. At this time, optionally, the second set interval of numbers of screwing turns for docking is set as 1 to 2 turns.

After the docking step S210 is completed, the bolt unlocking method further comprises: an unlocking step S220, wherein the bolt screwing element is driven to screw the bolt at a fourth speed in a set interval of numbers of screwing turns for unlocking until the screwing torque is decreased to a set unlocking torque, and at this moment it is determined that the bolt is successfully unlocked. By means of the unlocking step S220, it can be achieved that the bolt screwing element screws the bolt to be screwed into a released state. If a vehicle battery is taken as an example, the bolt is unscrewed from a battery and a vehicle chassis by the bolt screwing element, and fixation of the battery and the vehicle chassis is released. In addition, whether the foregoing unlocking process is successful or not can be determined according to data feedback of the screwing torque and the number of screwing turns. For example, when the bolt screwing element is screwed in the set interval of numbers of screwing turns for unlocking until the screwing torque of the bolt screwing element is decreased to the set unlocking torque, it is determined that the bolt is successfully unlocked. As an example, optionally, the set interval of numbers of screwing turns for unlocking is set as 8 to 12 turns.

In addition, for ensuring the unlocking reliability, a time determination factor can also be additionally introduced. The unlocking step S220 at this time further comprises: the bolt screwing element is driven to screw the bolt at the fourth speed in the set interval of numbers of screwing turns for unlocking until the screwing torque reaches the set unlocking torque, a preset unlocking time period is maintained, and at this moment it is determined that the bolt is successfully unlocked.

Optionally, in order to protect the bolt structure and improve the reliability of the bolt unlocking process, the bolt unlocking method further comprises an abnormality determination step S230: when the number of screwing turns for docking of the bolt screwing element is in the second set interval of numbers of screwing turns for docking, it is determined that the bolt is centered abnormally if the screwing torque is not increased to the set centering torque; and/or when the number of screwing turns for unlocking of the bolt screwing element is greater than the set interval of numbers of screwing turns for unlocking, it is determined that the bolt is unlocked abnormally if the screwing torque is not decreased to the set unlocking torque.

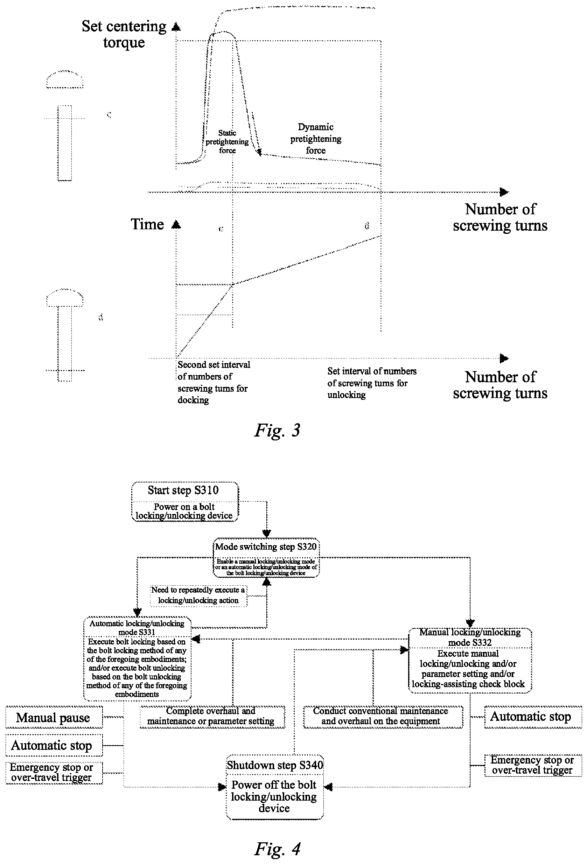

Referring to Fig. 3, multiple schematic diagrams of the variation trends of the parameters are shown, specifically embodying the overall unlocking process in an embodiment employing the bolt unlocking method. In particular, the screwing torque is almost 0 before the bolt screwing element is engaged with the bolt end. In this process, the number of screwing turns of the bolt screwing element is also uniformly increased. After successful engagement of the bolt screwing element with the bolt end, the static pretightening force experienced by the bolt screwing element increases dramatically. The unlocking process will then begin. After the screwing torque is exerted for a certain period, the bolt starts to get loose, at this moment, the static pretightening force experienced by the bolt screwing element starts to be converted into a dynamic pretightening force, and the dynamic pretightening force starts to be remarkably reduced until the screwing torque of the bolt screwing element is decreased to the set unlocking torque, so that the bolt unlocking process is completed. In consideration of experimental errors and possible influence factors in practical applications, the foregoing set parameters may also be set in a reasonable range, rather than being limited to a specific value.

Referring to Fig. 4, according to still another embodiment of the invention, a bolt locking/unlocking control method is also provided and used for a bolt locking/unlocking device, and such bolt locking/unlocking device comprises a bolt screwing element for bolt locking/unlocking and a locking-assisting check block, wherein the locking-assisting check block is used for providing a reaction force to adjust a screwing torque of the bolt screwing element.

Specifically, the bolt locking/unlocking control method comprises: a start step S310 for powering on the bolt locking/unlocking device; a mode switching step S320 for enabling a manual locking/unlocking mode or an automatic locking/unlocking mode of the bolt locking/unlocking device; a locking/unlocking step S330 comprising an automatic mode S331 for: executing bolt locking based on the bolt locking method of any of the foregoing embodiments; and/or executing bolt unlocking based on the bolt unlocking method of any of the foregoing embodiments; and a shutdown step S340 for powering off the bolt locking/unlocking device.

One of the core steps herein is the locking/unlocking step S330, wherein the automatic mode S331 has been described in detail in the foregoing embodiments and will not be repeated herein. The locking/unlocking step S330 further comprises the manual mode S332 for: executing manual locking/unlocking and/or parameter setting and/or locking-assisting check block. The manual mode S332 mainly aims at providing a standby method and an adjustment space for adjusting set parameters or the locking-assisting check block in real time to meet the requirements of applying actual situations. When equipment failure occurs or a bolt is in a complex working condition, manual locking/unlocking can also be directly used as an alternative. According to the foregoing method, a system design of bolt locking/unlocking based on a servo motor is used, and a bolt locking/unlocking mechanism control state machine automatically achieves master-slave response and corresponding control with respect to manual locking/unlocking, automatic locking/unlocking and abnormal shutdown.

In addition, there are also several execution sequences among the steps. Some examples are set forth below for illustration.

For example, switching to the automatic mode S331 or the shutdown step S340 is performed after execution of the manual mode S332 is completed. If overhaul and maintenance or parameter setting work is performed in the manual mode S332, switching to the automatic mode S331 to start a bolt locking/unlocking process can be performed after corresponding maintenance or debugging is completed; however, if the action performed in the manual mode S332 is manual locking/unlocking, or a manual pause is required for a specific situation, or a problem such as an emergency stop or an over-travel trigger occurs, switching to the shutdown step S340 can be performed after the corresponding problem is solved.

For another example, after the shutdown step S340 is completed, switching to the manual mode S332 is performed, and at this time conventional maintenance and overhaul can be conducted on the equipment.

For still another example, switching to the mode switching mode S320 or the shutdown step S340 is performed after execution of the automatic mode S331 is completed. If the locking/unlocking action is normally completed in the automatic mode S331 and then it is possible to repeat the action, it may be switched to the mode switching step S320 to wait for the next command to be executed. If it is not necessary for the moment to repeatedly execute the locking/unlocking action again or if there is a problem such as an emergency stop or an over-travel trigger, it may be thereafter switched to the shutdown step S340.

By switching foregoing steps, the interaction between bolt screwing and unscrewing and the control states of a master station is also achieved.

In addition, although it is not shown in the drawings, according to still another aspect of the invention, a vehicle battery replacement method is also provided, comprises the bolt locking/unlocking control method mentioned in any of the foregoing embodiments, and also has a corresponding technical effect.

The above examples mainly illustrate the bolt locking method, the bolt unlocking method, the bolt locking/unlocking method and the vehicle battery replacement method of the invention. Although only some embodiments of the invention are described, it will be appreciated by those skilled in the art that the invention may be embodied in many other forms without departing from the essence and scope thereof. Accordingly, the presented examples and embodiments are to be considered as illustrative rather than restrictive, and the invention may cover various modifications and substitutions without departing from the spirit and scope of the invention as defined by the appended claims.

## Claims

1. A bolt locking method, which is used for a bolt locking device comprising a bolt screwing element and a locking-assisting check block, the locking-assisting check block being used for providing a reaction force to adjust a screwing torque of the bolt screwing element; **characterized in that** the bolt locking method comprises:
a docking step S110, wherein the bolt screwing element is driven to be centered and engaged with a bolt end at a first speed in a first set interval of numbers of screwing turns for docking, and at this moment the bolt screwing element abuts against the locking-assisting check block; and
a locking step S 120, wherein the bolt screwing element is driven to screw a bolt at a second speed in a set interval of numbers of screwing turns for locking until a screwing torque is increased to a set locking torque, and at this moment it is determined that the bolt is successfully locked; and meanwhile, the bolt screwing element counteracts the reaction force of the locking-assisting check block.

2. The bolt locking method according to claim 1, **characterized in that** the bolt locking method further comprises an abnormality determination step S130:
when the screwing torque is increased to the set locking torque, it is determined that the bolt is locked abnormally if the number of screwing turns for locking of the bolt screwing element is smaller than the set interval of numbers of screwing turns for locking; and/or
when the number of screwing turns for locking of the bolt screwing element is greater than the set interval of numbers of screwing turns for locking, it is determined that the bolt is locked abnormally if the screwing torque is not increased to the set locking torque.

3. The bolt locking method according to claim 1 or 2, **characterized in that** the set interval of numbers of screwing turns for docking is 1 to 2 turns.

4. The bolt locking method according to claim 1 or 2, **characterized in that** in the docking step S 110, the first speed is set to a uniformly decelerating state.

5. The bolt locking method according to claim 1 or 2, **characterized in that** in the locking step S120, the second speed is set to a uniform speed state.

6. The bolt locking method according to claim 1 or 2, **characterized in that** the first speed is greater than or equal to the second speed.

7. A bolt unlocking method, which is used for a bolt unlocking device comprising a bolt screwing element; **characterized in that** the bolt unlocking method comprises:
a docking step S210, wherein the bolt screwing element is driven to be centered and engaged with a bolt end at a third speed in a second set interval of numbers of screwing turns for docking until a screwing torque of the bolt screwing element is increased to a set centering torque, and at this moment it is determined that the bolt screwing element is successfully centered with a bolt; and
an unlocking step S220, wherein the bolt screwing element is driven to screw the bolt at a fourth speed in a set interval of numbers of screwing turns for unlocking until the screwing torque is decreased to a set unlocking torque, and at this moment it is determined that the bolt is successfully unlocked.

8. The bolt unlocking method according to claim 7, **characterized in that** the bolt unlocking method further comprises an abnormality determination step S230:
when the number of screwing turns for docking of the bolt screwing element is in the second set interval of numbers of screwing turns for docking, it is determined that the bolt is centered abnormally if the screwing torque is not increased to the set centering torque; and/or
when the number of screwing turns for unlocking of the bolt screwing element is greater than the set interval of numbers of screwing turns for unlocking, it is determined that the bolt is unlocked abnormally if the screwing torque is not decreased to the set unlocking torque.

9. The bolt unlocking method according to claim 7, **characterized in that** the unlocking step S220 further comprises:
the bolt screwing element is driven to screw the bolt at the fourth speed in the set interval of numbers of screwing turns for unlocking until the screwing torque reaches the set unlocking torque, a preset unlocking time period is maintained, and at this moment it is determined that the bolt is successfully unlocked.

10. The bolt unlocking method according to any one of claims 7 to 9, **characterized in that** the set interval of numbers of screwing turns for unlocking is 8 to 12 turns.

11. The bolt unlocking method according to any one of claims 7 to 9, **characterized in that** the set interval of numbers of screwing turns for docking is 1 to 2 turns.

12. A bolt locking/unlocking control method, which is used for a bolt locking/unlocking device comprising a bolt screwing element used for bolt locking/unlocking and a locking-assisting check block, the locking-assisting check block being used for providing a reaction force to adjust a screwing torque of the bolt screwing element, **characterized in that** the bolt locking/unlocking control method comprises:
a start step S310 for powering on the bolt locking/unlocking device;
a mode switching step S320 for enabling a manual locking/unlocking mode or an automatic locking/unlocking mode of the bolt locking/unlocking device;
a locking/unlocking step S330 comprising an automatic mode S331 for: executing bolt locking based on the bolt locking method according to any one of claims 1 to 6; and/or executing bolt unlocking based on the bolt unlocking method of any one of claims 7 to 11; and
a shutdown step S340 for powering off the bolt locking/unlocking device.

13. The bolt locking/unlocking control method according to claim 12, **characterized in that** the locking/unlocking step S330 further comprises a manual mode S332 for: executing manual locking/unlocking and/or parameter setting and/or locking-assisting check block.

14. The bolt locking/unlocking control method according to claim 13, **characterized in that** switching to the automatic mode S331 or the shutdown step S340 is performed after execution of the manual mode S332 is completed.

15. The bolt locking/unlocking control method according to claim 13, **characterized in that** switching to the manual mode S332 is performed after the shutdown step S340 is completed.

16. The bolt locking/unlocking control method according to claim 12, **characterized in that** switching to the mode switching mode S320 or the shutdown step S340 is performed after execution of the automatic mode S331 is completed.

17. A vehicle battery replacement method, **characterized in that** the vehicle battery replacement method comprises the bolt locking/unlocking control method according to any one of claims 12 to 16.
